# EUROPÄISCHE PATENTSCHRIFT

(11) **EP 1 902 609 B1**
(45) Veröffentlichungstag und Bekanntmachung des Hinweises auf die Patenterteilung: **14.10.2009**
(21) Anmeldenummer: 07013086.9
(22) Anmeldetag: 04.07.2007
(51) Int. Cl.: A01D 41/127

(54) **Verfahren zur Steuerung einer Anzeigeeinrichtung in einer Erntemaschine**
Method for controlling a display device in a harvester
Procédé destiné à la commande d'un dispositif d'affichage dans une moissonneuse

(30) Priorität: 19.09.2006 DE 102006044628
(43) Veröffentlichungstag der Anmeldung: 26.03.2008
(73) Patentinhaber: CLAAS Selbstfahrende Erntemaschinen GmbH, 33428 Harsewinkel (DE)
(72) Erfinder: Behnke, Willi, 33803 Steinhagen (DE); Bußmann, Christoph, 33428 Harsewinkel (DE); Neu, Sebastian, 49196 Bad Laer (DE); Eggenhaus, Georg, 48369 Saerbeck (DE)
(74) Vertreter: Beckord, Klaus

(56) Entgegenhaltungen:
- DE-A1- 10 147 733
- DE-A1- 10 203 370
- US-A1- 2006 069 485

## Beschreibung

Die Erfindung betrifft ein Verfahren zur Steuerung einer Anzeigeeinrichtung in einer Erntemaschine, bei dem für einen Bediener der Erntemaschine eine Anzahl von aktuellen Arbeitsergebniswerten der Erntemaschine auf der Anzeigeeinrichtung angezeigt werden, sowie ein Verfahren zur Steuerung einer Erntemaschine. Die Erfindung betrifft des Weiteren eine Anzeigesteuerungseinrichtung zur Steuerung einer Anzeigeeinrichtung in einer Erntemaschine sowie eine Erntemaschine mit einer solchen Anzeigesteuerungseinrichtung.

Landwirtschaftliche Erntemaschinen verfügen zur Bearbeitung verschiedener Erntegüter über ein oder mehrere einstellbare Arbeitsaggregate. Dabei sind die einzelnen Aggregate bei modernen, selbstfahrenden Erntemaschinen mit in der Regel aus der Fahrerkabine fernbedienbaren Stelleinrichtungen ausgestattet, mit denen verschiedene Steuerparameter der Arbeitsaggregate eingestellt werden können. Zu den typischen Arbeitsaggregaten eines Mähdreschers gehören beispielsweise das Dreschwerk oder die dem Dreschwerk nachgeschaltete Abscheideeinrichtung und Reinigungseinrichtung. Unterschiedliche Erntegüter und Emtebedingungen wie Feuchtigkeit, Bestandshöhe, Bodenbeschaffenheit etc. erfordern, dass die einzelnen Aggregate bzw. deren einstellbare Steuerparameter möglichst genau an den individuellen laufenden Ernteprozess angepasst werden, um insgesamt ein optimales Arbeitsergebnis zu erzielen. Damit der Fahrer jederzeit über die Arbeitsleistung seiner Maschine informiert ist und entsprechend die Steuerparameter einstellen kann, um die optimale Leistung zu erreichen, werden auf einer Anzeigeeinrichtung in der Fahrerkabine permanent die aktuellen Arbeitsergebniswerte, beispielsweise die aktuellen Abscheideverluste oder Reinigungsverluste, angezeigt.

Trotz vieler Einstellhilfen, welche die Hersteller der Erntemaschine den Bedienern anbieten, ist es für die Bediener nach wie vor relativ schwierig, die Maschinen so einzustellen, dass sie gemäß den gewünschten Vorgaben optimal arbeiten. Daher werden inzwischen immer mehr Prozesse zur Einstellung, insbesondere zur Optimierung und/oder Überwachung der Erntemaschine bzw. der Aggregate automatisiert.

So wird beispielsweise in der DE 101 47 733 A1 ein automatisches Verfahren zur Optimierung des Dreschwerks und der Reinigungseinrichtung einer landwirtschaftlichen Erntemaschine angegeben. Dabei wird jeweils nur ein Steuerparameter der Erntemaschine bei ansonsten gleicher Einstellung und unter gleich bleibenden Erntebedingungen variiert. Anschließend wird anhand eines Vergleichs der Arbeitsergebnisse genau derjenige Einstellwert für den betreffenden Steuerparameter ausgewählt, der zu einem besseren Arbeitsergebnis geführt hat. Dabei können die Arbeitsergebniswerte aufgezeichnet werden und anhand der aufgezeichneten Arbeitsergebnisse kann eine Beziehung zwischen dem variierten Einstellparameter und dem erzielten Arbeitsergebnis ermittelt werden, auf Basis deren dann ein optimaler Einstellparameter gewählt werden kann. Durch dieses Verfahren erkennen auch ungeübte Bediener relativ schnell, ob, wann und inwieweit der variierte Steuerparameter einen Einfluss auf das Arbeitsergebnis hat, und können für eine entsprechende Einstellung des Steuerparameters sorgen. Diese Einstellung kann grundsätzlich auch automatisch erfolgen.

Weiterhin wird in der DE 10 2005 014 278.8 ein automatisches Optimierungsverfahren für einen Steuerparameter eines Arbeitsaggregats einer Erntemaschine beschrieben. Bei diesem Verfahren werden für mehrere verschiedene Arbeitsergebnisparameter jeweils Arbeitsergebnis-Kennlinien in Abhängigkeit von den betreffenden Steuerparametern ermittelt. Basierend auf einer Kombination der ermittelten Arbeitsergebnis-Kennlinien wird dann ein optimaler Zieleinstellwert des Parameters bestimmt.

Bei genannten Einstellautomatismen werden also verschiedene Einstellungen des Steuerparameters geprüft. Dieser automatische Prüfvorgang, bei dem naturgemäß der Steuerparameter auch auf Werte eingestellt wird, bei denen kein optimales Arbeitsergebnis erreicht werden kann, kann einige Minuten dauern. In dieser Zeit kann sich die Anzeige der aktuellen Arbeitsergebniswerte dementsprechend stark ändern. Insbesondere Fahrer, die es nicht gewohnt sind, mit automatischen Optimierungssytemen zu arbeiten, sind darauf trainiert, bei Anzeigeänderungen sehr schnell zu reagieren, indem sie z. B. die Emtegeschwindigkeit anpassen. Ein solches Vorgehen wäre jedoch kontraproduktiv für das Optimierungsverfahren, da es für eine Feststellung optimaler Zieleinstellwerte notwendig ist, dass während der automatischen Variation des betreffenden Steuerparameters alle anderen Parameter konstant bleiben.

Es ist daher eine Aufgabe der vorliegenden Erfindung, ein geeignetes Anzeigenmanagement zur Verfügung zu stellen, mit dem die Gefahr reduziert wird, dass der Fahrer in ungeeigneter Weise in den Optimierungsprozess eingreift.

Diese Aufgabe wird durch ein Verfahren gemäß Patentanspruch 1 sowie eine Anzeigesteuerungseinrichtung gemäß Patentanspruch 9 bzw. durch eine Erntemaschine mit einer solchen Anzeigesteuerungseinrichtung gemäß Patentanspruch 10 gelöst.

Bei dem erfindungsgemäßen Verfahren wird während eines Optimierungsprozesses, in welchem vorübergehend, d. h. jeweils über eine relativ kurze Zeitspanne, verschiedene Einstellungen eines Steuerparameters eines Arbeitsaggregats einer Erntemaschine angefahren werden, um automatisch einen an einen Ernteprozess angepassten Zieleinstellwert des betreffenden Steuerparameters zu ermitteln, die Anzeige von solchen aktuellen Arbeitsergebniswerten unterdrückt oder als ungültig markiert, die durch den betreffenden Steuerparameter beeinflusst werden.

Mit Hilfe des erfindungsgemäßen Verfahrens wird also entweder durch eine entsprechende Markierung der Anzeigewerte als "ungültige" Werte dem Fahrer mitgeteilt, dass er während einer bestimmten Optimierungsphase warten muss und nicht eingreifen sollte. Alternativ wird dem Fahrer dies durch eine Unterdrückung der Anzeige signalisiert, d. h. dem Fahrer wird die Anzeige vorübergehend erst gar nicht in einer Form präsentiert, durch die er zu ungewünschten Einstellaktionen veranlasst werden könnte.

Eine entsprechende Anzeigesteuerungseinrichtung zur Durchführung eines solchen Verfahrens muss einen Signaleingang zum Empfang von aktuellen Arbeitsergebniswerten der Erntemaschine sowie ein Statussignaleingang zum Empfang von Statusinformationen der Erntemaschine aufweisen, welche signalisieren, ob im Rahmen eines Optimierungsprozesses ein bestimmter Steuerparameter eines Arbeitsaggregats einer Erntemaschine vorübergehend in verschiedenen Einstellungen gefahren wird, um automatisch einen an den Ernteprozess angepassten Zieleinstellwert des betreffenden Steuerparameters zu ermitteln. Weiterhin wird eine Anzeigeschnittstelle benötigt, beispielsweise ein geeigneter Grafikbaustein bzw. eine Grafikkarte sowie geeignete Softwarekomponenten, welche an die Anzeigeeinrichtung auf Basis der Arbeitsergebniswerte generierte Steuerbefehle übergibt, um diese Arbeitsergebniswerte in einer definierten Weise auszugeben. Die Anzeigeschnittstelle muss dabei so ausgebildet sein, dass während eines Optimierungsprozesses die Anzeige von solchen aktuellen Arbeitsergebniswerten unterdrückt oder als ungültig markiert wird, die durch den betreffenden Steuerparameter beeinflusst werden.

Vorzugsweise gilt dies jedoch nur für die Anzeige von solchen Arbeitsergebnissen, die durch den Steuerparameter relevant beeinflusst werden. Der Begriff "relevant beeinflusst" ist hierbei so zu verstehen, dass die Veränderung des Steuerparameters mittelbar oder unmittelbar solche Auswirkungen auf die betreffenden Arbeitsergebniswerte hat, dass diese für den Bediener auf einer Anzeigeeinrichtung auch ausreichend deutlich erkennbar sind, so dass er sich genötigt fühlen könnte, gegenzusteuern. Sofern ein Steuerparameter dagegen lediglich geringfügige, d. h. "irrelevante" Auswirkungen auf den betreffenden Arbeitsergebniswert hat, so sind diese Auswirkungen in der Regel in der Anzeige für den Bediener ohnehin kaum erkennbar und eine entsprechende Markierung oder Unterdrückung des betreffenden Arbeitsergebniswertes ist nicht nötig bzw meist auch nicht sinnvoll. Ebenso können selbstverständlich alle Arbeitsergebnisse weiterhin angezeigt werden, die gar nicht durch den betreffenden Parameter beeinflusst werden. Ein Beispiel hierfür ist eine Einstellung der Steuerparameter der Reinigungseinrichtung, welche in der Regel keine Auswirkungen auf die Abscheideverluste hat, weil die Abscheideeinrichtung der Reinigungseinrichtung vorgeschaltet ist. Andererseits werden dagegen sehr wohl die Reinigungsverluste auch durch die Einstellung von Steuerparametern der Abscheideeinrichtung beeinflusst.

Um welche Arbeitsergebniswerte es sich handelt, die durch einen bestimmten Steuerparameter (relevant) beeinflusst werden, kann beispielsweise in einer geeigneten Tabelle hinterlegt sein, welche z. B. vom Hersteller der Erntemaschine vorgegeben wird. Die Anzeigeschnittstelle kann dann anhand der Statusinformation feststellen, welcher Steuerparameter durch den laufenden Optimierungsprozess betroffen ist, aus der Tabelle die davon (relevant) beeinflussten Arbeitsergebnisse ermitteln und kann entsprechend die Steuerbefehle anpassen, so dass die betreffenden Arbeitsergebniswerte in der gewünschten Weise unterdrückt bzw. markiert werden.

Eine erfindungsgemäße Anzeigesteuerungseinrichtung kann in einer beliebigen Erntemaschine, beispielsweise in einem Mähdrescher, Feldhäcksler oder Ähnlichem eingesetzt werden, welcher eine entsprechende Anzeigeeinrichtung zur Ausgabe von aktuellen Arbeitsergebniswerten an einen Bediener aufweist. Dabei kann die Steuerungseinrichtung insbesondere auch Teil der Maschinensteuerungseinrichtung sein, mit der z. B. auch der gesamte Optimierungsvorgang gesteuert wird, d. h. von dem aus die einzelnen Arbeitsaggregate der Erntemaschine angesteuert werden.

Insbesondere kann die Anzeigesteuerungseinrichtung mit ihren Komponenten in Form von Softwaremodulen auf einem separaten Mikroprozessor oder in einem Mikroprozessor, welcher z. B. einen zentralen Teil der Maschinensteuereinrichtung der Erntemaschine bildet, realisiert sein. Dabei ist es auch möglich, eine bereits vorhandene programmierbare Steuereinrichtung einer Erntemaschine durch Implementierung entsprechender Softwaremodule erfindungsgemäß nachzurüsten. Die erforderlichen Softwarekomponenten können hierzu im Rahmen eines Updates direkt in den Datenspeicher der programmierbaren Steuereinrichtung geladen werden.

Die Unteransprüche enthalten jeweils besonders vorteilhafte Ausgestaltungen und Weiterbildungen der Erfindung, wobei die Anzeigesteuerungseinrichtung auch entsprechend den abhängigen Ansprüchen des erfindungsgemäßen Verfahrens zur Steuerung der Anzeigeeinrichtung weitergebildet sein kann.

Für die Unterdrückung der Arbeitsergebniswerte auf der Anzeige gibt es verschiedene Möglichkeiten.

Eine Möglichkeit besteht darin, dass die betreffenden aktuellen Arbeitsergebniswerte in einer abgeschwächten Darstellung auf einem Display angezeigt werden, beispielsweise anstatt in einer sonst farbigen Darstellung nur in einer hellen Graudarstellung. In diesem Fall sieht der Fahrer zwar weiterhin die aktuellen Arbeitsergebnisse. Jedoch wird ihm durch die abgeschwächte Darstellung intuitiv signalisiert, dass es sich um kurzzeitig "verfälschte Arbeitsergebniswerte" handelt und ein Eingreifen nicht erforderlich ist.

Bei einer besonders bevorzugten Variante wird die Anzeige der betreffenden aktuellen Arbeitsergebniswerte vollständig ausgeblendet. Ganz besonders bevorzugt wird dabei sogar der komplette Anzeigebereich ausgeblendet, in dem üblicherweise die Arbeitsergebniswerte angezeigt werden. Der entsprechende Displaybereich steht dann beispielsweise zur Ausgabe anderer Informationen zur Verfügung, die in einem solchen Optimierungsprozess sinnvoll sein können.

Eine weitere Alternative, um zu verhindern, dass der Fahrer auf Veränderungen der Arbeitsergebniswerte reagiert, besteht darin, dass anstelle der aktuellen Arbeitsergebniswerte weiterhin die Arbeitsergebniswerte vor einem Start des Optimierungsprozesses angezeigt werden. D. h. die Anzeige wird für den betreffenden Steuerparameter in einem Zustand vor Beginn des Optimierungsprozesses "eingefroren".

Wie bereits erläutert, wird das erfindungsgemäße Anzeigeeinrichtungssteuerungsverfahren sinnvoll innerhalb eines Verfahrens zur Steuerung einer Erntemaschine eingesetzt, bei dem zur Ermittlung eines an einen Ernteprozess angepassten Zieleinstellwerts für einen Steuerparameter eines Arbeitsaggregats einer Erntemaschine der betreffende Steuerparameter in einem Optimierungsprozess automatisch variiert wird und dabei Arbeitsergebnisse bei verschiedenen Einstellungen des Steuerparameters ermittelt werden und auf Basis dieser Arbeitsergebniswerte der Zieleinstellwert des Steuerparameters bestimmt wird. Üblicherweise ist es für den Fahrer jederzeit möglich, einen solchen automatischen Optimierungsprozess manuell zu starten. Das heißt, der Fahrer gibt über eine Benutzerschnitkstelle einen Startbefehl, dass er bestimmte Zieleinstellwerte neu ermitteln möchte, und lässt dann den weiteren Optimierungsvorgang automatisch ablaufen. In diesem Fall ist dem Fahrer bewusst, dass ein entsprechender Optimierungsvorgang abläuft. Die Neigung, gegenzusteuern, ist dann relativ gering. Daher macht die Anwendung des erfindungsgemäßen Verfahrens insbesondere dann Sinn, wenn der Optimierungsprozess bei Eintritt eines vorgegebenen Ereignisses automatisch, das heißt ohne Eingreifen des Fahrers, gestartet wird.

Solche vollautomatischen Steuerungen der Erntemaschine, bei denen auch die Optimierungsprozesse automatisch gestartet werden, sind insofern vorteilhaft, da auch das Auffinden des richtigen Zeitpunkts zum Start des Optimierungsvorgangs wichtig ist, um eine insgesamt optimale Ernteleistung zu erreichen. So ist es einerseits vorteilhaft, den Optimierungsprozess häufig zu durchlaufen, damit die Maschineneinstellung den Erntebedingungen immer besonders gut angepasst ist. Andererseits hat eine zu häufige Neuoptimierung auch Nachteile. So werden in jedem Optimierungsprozess kurzzeitig auch ungünstige Einstellpositionen angefahren, an denen erheblich erhöhte Verluste auftreten. Ein weiteres Problem ist, dass sich durch häufige Optimierungsprozesse und somit häufige Verstellungen der Arbeitsaggregate über große Einstellbereiche der Verschleiß an den Verstellorganen erhöht. Zudem kann sich die Erntemaschine auch in einer vorübergehenden Erntesituation befinden, in der es sich überhaupt nicht lohnt, eine neue Einstellung zu suchen. Solche Situationen liegen z. B. dann vor, wenn der Fahrer gerade am Vorgewende freischneidet und dadurch ohnehin langsamer fährt, als es die Maschinenleistung zulässt, Daher bietet sich für das Maschinensteuerungsverfahren ein ereignisgestarteter Optimierungsprozess an.

Eine Möglichkeit hierfür ist ein zeitabhängiger Start des Optimierungsprozesses. So kann beispielsweise immer nach Ablauf eines bestimmten Zeitraums ein neuer Optimierungsprozess gestartet werden. Nach der allgemeinen Erfahrung können sich im Verlauf eines Emtetags die Erntebedingungen stark verändern. Wird der Optimierungsprozess im Abstand von ca. einer Stunde aktiviert, können einige geänderte Erntebedingungen regelmäßig erfasst werden. Ebenso kann aber der Start des Optimierungsprozesses auch zu genau vordefinierten Zeitpunkten erfolgen, beispielsweise einmal am Vormittag, einmal am Mittag und einmal gegen Abend.

Bei einer weiteren Alternative wird als Ereignis eine bestimmte Änderung der Erntebedingungen definiert. So kann beispielsweise durch Sensoren erkannt werden, wann sich bestimmte Erntebedingungen verändert haben. Ein Beispiel hierfür ist der Durchsatz-Sensor. Hat sich der Korndurchsatz um einen bestimmten Betrag im Vergleich zur vorherigen Einstellung verändert, so wäre dies ein Ereignis, das zum Start eines neuen Optimierungsprozesses herangezogen werden könnte.

Ebenso kann als Start-Ereignis auch herangezogen werden, wenn die Erntemaschine bestimmte geographische Positionen erreicht. So ist es in Kombination mit den üblichen Ortsbestimmungstechniken möglich, beispielsweise GPS-Technik (GPS = Global Positioning System), den Optimierungsprozess in Abhängigkeit von der aktuellen Emteposition der Erntemaschine zu starten. So kann erreicht werden, dass an bestimmten Stellen, an denen veränderte Erntebedingungen zu erwarten sind, z. B. in einer Senke oder auf einer Anhöhe, sofort die Einstellung der Steuerparameter angepasst wird. Ebenso kann auf diese Weise das Starten des Optimierungsprozesses verhindert werden, beispielsweise an Stellen, an denen Erntebedingungen vorliegen, die nicht feldtypisch und die nur vorübergehend sind, wie z. B. am Waldrand.

Ebenso kann das Ereignis auch als eine Kombination von verschiedenen der vorgenannten Ereignisse vordefiniert werden, d. h. dass beispielsweise zu bestimmten Zeiten ein automatischer Start des Optimierungsprozesses erfolgt, aber nicht dann, wenn sich die Erntemaschine zu diesem Zeitpunkt gerade an bestimmten Positionen befindet, an denen eine Optimierung nicht sinnvoll wäre.

Bei einer besonders bevorzugten Variante wird der Optimierungsprozess nur dann bei Eintritt eines Ereignisses automatisch gestartet, wenn die Erntemaschine in einem automatischen Fahrgeschwindigkeitsregetungsmodus betrieben wird. Hierbei wird also zunächst geprüft, ob ein Vorfahrtsregler der Maschine aktiviert ist. Nur in diesem Fall kann eine automatische ereignisgesteuerter Auslösung des Optimierungsprozesses erfolgen. Dies hat folgende Vorteile:

Zum einen wird in der Regel bei vorübergehenden schwierigen Erntebedingungen wie Lagerstellen, Vorgewende oder Grünstellen ohne aktivierten Vorfahrtsregler geerntet. Genau bei diesen vorübergehenden Bedingungen ist aber ein automatischer Optimierungsprozess ohnehin weniger sinnvoll. Zum anderen muss der Fahrer bei eingestelltem Vorfahrtsregler nicht auf die Einhaltung der Sollerntegeschwindigkeit achten. Üblicherweise ist es nämlich bei den derzeit möglichen Verfahren zur automatischen Optimierung erforderlich, dass während des Optimierungsprozesses die Maschine entweder mit einer konstanten Geschwindigkeit oder mit einem konstanten Emtegutdurchsatz gefahren wird. Übliche Vorfahrtsregler haben aber bereits passende Betriebsarten. So kann in der Regel der Vorfahrtsregler in eine Tempomat-Betriebsart gestellt werden, in der die Fahrgeschwindigkeit der Erntemaschine in Abhängigkeit von einer konstanten Sollgeschwindigkeit geregelt wird. Ein weiterer Betriebsmodus ist die Durchsatzregelungs-Betriebsart, in welcher die Fahrgeschwindigkeit der Erntemaschine in Abhängigkeit von einem Emtegutdurchsatz-Sollwert geregelt wird.

In der Regel gibt es bei den derzeit genutzten Vorfahrtsreglern zusätzlich eine Verlustregelungs-Betriebsart, in der die Fahrgeschwindigkeit in Abhängigkeit von einem Erntegutverlust-Sollwert geregelt wird. Diese Verlustregelungs-Betriebsart ist jedoch für die Optimierungsprozesse nicht geeignet. Bei einer bevorzugten Variante wird daher, wenn sich der Vorfahrtsregler in einer nicht geeigneten Betriebsart befindet, beim Start des Optimierungsprozesses automatisch dafür gesorgt, dass der Vorfahrtsregler in eine geeignete Betriebsart - je nach gewählten Optimierungsprozess beispielsweise die Tempomat- oder die Durchsatzregelungs-Betriebsart - umgeschaltet wird.

Die Erfindung wird im Folgenden unter Hinweis auf die beigefügten Figuren anhand eines Ausführungsbeispiels noch einmal näher erläutert. Es zeigen:
- Figur 1: einen schematischen Querschnitt durch einen Mähdrescher,
- Figur 2: eine Darstellung einer Anzeigeeinrichtung in einem Mähdrescher mit einer üblichen grafischen Benutzeroberfläche mit einer Vielzahl von Anzeigefeldern sowie eine schematische Darstellung einer erfindungsgemäßen Anzeigesteuerungseinrichtung,
- Figur 3: eine vergrößerte Darstellung des rechten oberen Anzeigefeldes in der graphischen Benutzeroberfläche in Figur 2, in welcher die Abscheideverluste, die Überkehr und die Reinigungsverluste angezeigt werden,
- Figur 4: ein Flussdiagramm zum Ablauf eines automatischen Optimierungsprozesses,
- Figur 5: eine vergrößerte Darstellung des Anzeigefeldes aus Figur 3, jedoch mit ausgeblendeten Überkehr- und Reinigungsverlustanzeigebereichen während des Ablaufs eines automatischen Optimierungsprozesses.

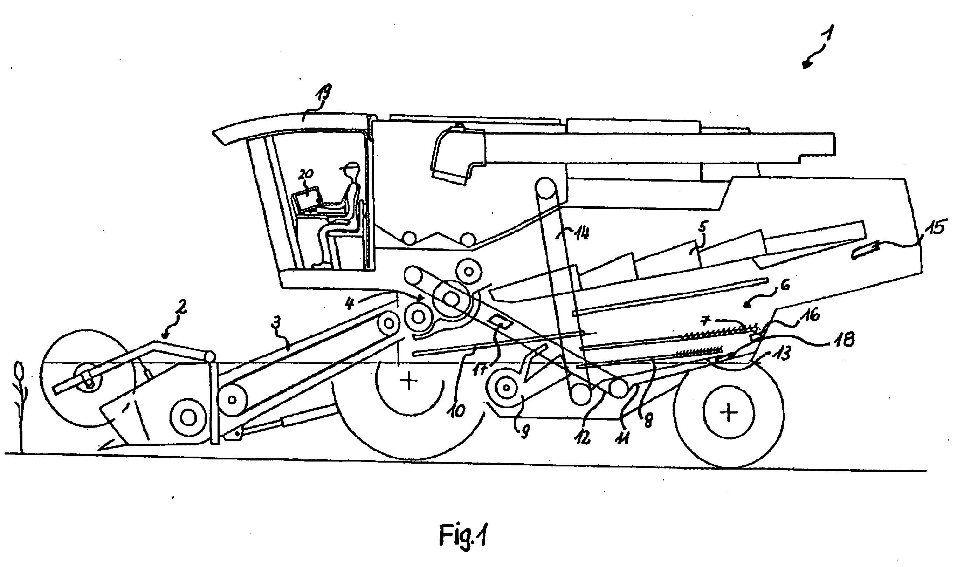

Bei dem in Figur 1 gezeigten Ausführungsbeispiel der Erfindung handelt es sich um einen selbstfahrenden Mähdrescher 1 mit einem so genannten Tangential- oder auch Querflussdreschwerk 4 und einer dahinter angeordneten Abscheideeinrichtung 5 in Form eines Hordenschüttlers mit mehreren Schüttlerstufen. Unterhalb der Abscheideeinrichtung 5 befindet sich eine Reinigungseinrichtung 6, bestehend aus mehreren Sieben 7, 8 und einem Gebläse 9. Es wird an dieser Stelle ausdrücklich darauf hingewiesen, dass die Erfindung nicht auf einen Mähdrescher, insbesondere nicht auf einen in dieser Weise aufgebauten Mähdrescher, beschränkt ist.

Die Arbeitsweise eines solchen Mähdreschers 1 wird nachfolgend beschrieben:

Das Erntegut wird zunächst mittels einer Haspel des Mähdreschers auf die Mäheinrichtung 2 gelegt und von Mähmessern abgeschnitten. Das Erntegut wird dann über eine Einzugschnecke und einen Schrägförderer durch einen Einzugskanal 3 zum Eingang des Dreschwerks 4 transportiert.

Im Dreschwerk 4 wird das Erntegut gedroschen, d. h. geschlagen und/oder zerrieben, wobei ein Korn-/Streugemisch durch den Dreschkorb nach unten fällt, welches dann über einen Auffang- und Zuführboden 10 der Reinigungseinrichtung 6 zugeführt wird. Vom Dreschkorb 4 aus wird der gedroschene Gutstrom zur Abscheideeinrichtung 5 transportiert, durch die die noch im Gutstrom befindlichen Körner sowie Kurzstroh und Spreu abgetrennt werden. Die Körner, das Kurzstroh und die Spreu gelangen dann ebenfalls in die Reinigungseinrichtung 6, in welcher die Körner vom Kurzstroh und der Spreu getrennt werden. Dies erfolgt in der Weise, dass durch die Sieböffnungen (Löcher, Maschen, Schlitze) in den schwingend angetriebenen Sieben 7, 8 mittels des Gebläses 9 Wind geblasen wird, welcher das über die Siebe 7, 8 geführte Erntegut auflockert und für das Heraustrennen der spezifisch leichteren Spreu und Kurzstreu sorgt, während die schwereren Emtegutkörner durch die Sieböffnungen fallen. Hierbei sind ein Obersieb 7 und ein Untersieb 8 teilweise übereinander angeordnet, so dass das Erntegut in verschiedenen Stufen unterschiedlich fein gesiebt wird.

Die Körner, welche durch beide Siebe 7, 8 der Reinigungseinrichtung 6 gelangt sind, fallen auf einen ersten Auffang- und Führungsboden 13 und werden einer Kornförderschnecke zugeführt. Sie werden dann von einem Elevator 14 in einen Korntank des Mähdreschers 1 transportiert. Die Teilchen, die in der Reinigungsvorrichtung 6 erst am hinteren Ende durch die Sieböffnungen des Obersiebs 7 fallen, sind in der Regel schwerere Teilchen, d. h. Teilchen, welche ein Korn enthalten, das sich nicht vollständig von anderen Bestandteilen des Getreides gelöst hat. Diese Teilchen fallen hinter dem Untersieb 8 auf einen zweiten Auffang- und Führungsboden 11, welcher unterhalb und etwas hinter dem ersten Auffang- und Führungsboden 13 angeordnet ist, und werden als sogenannte Überkehr über einen Überkehrelevator 12 noch einmal zum Dreschwerk 4 zurückgeführt.

Bestandteile, die nicht durch das Obersieb 7 fallen, werden als Verlust ausgeworfen. Ebenso wandern das Stroh sowie ein bestimmter Prozentsatz an Verlustkörnern über die Abscheideeinrichtung 5 zum hinteren Ende des Mähdreschers 1 und werden dort ausgeworfen.

Zum Messen der Abscheideverluste befindet sich am hinteren Ende der Abscheideeinrichtung 5 eine Abscheideverlust-Messeinrichtung (Abscheideverlustsensor) 15, welche üblicherweise als Klopfsensor aufgebaut ist. Das von diesem Verlustsensor 15 erfasste Signal ist ein Maß dafür, wie viel Kornbestandteile unmittelbar hinter der Abscheideeinrichtung 5 aus der Maschine 1 fallen, so dass hiermit die Abscheideverluste spezifiziert werden können.

Zum Messen der Reinigungsverluste befindet sich direkt unterhalb des hinteren Endes des Obersiebs 7 eine Reinigungsverlust-Messeinrichtung (Reinigungsverlustsensor) 16, welche ebenfalls üblicherweise als Klopfsensor aufgebaut ist. Das von diesem Verlustsensor 16 erfasste Signal ist ein Maß dafür, wie viele Bestandteile unmittelbar hinter dem Obersieb 7 nach unten fallen. Daraus lässt sich der Gesamt-Reinigungsverlust relativ gut einschätzen.

Die Volumenüberkehr kann wiederum mit Hilfe einer Volumenüberkehr-Messeinrichtung (Volumenüberkehr-Sensor) 17 gemessen werden, die sich im Überkehrelevator 12 befindet und dort die transportierte Gesamtmenge misst, beispielsweise anhand des vom Überkehrelevator 12 transportierten Gewichts oder durch optische und/oder kapazitive Messungen etc.

Der Kornanteil innerhalb der Volumenüberkehr, d. h. die Komüberkehr, wird mit einer Kornüberkehr-Messeinrichtung (Komüberkehr-Sensor) 18 gemessen, welche auf dem zweiten Auffang- und Führungsboden 11 hinter dem Untersieb 8 angeordnet ist. Auch hierbei handelt es sich vorzugsweise um einen Klopfsensor, dessen Ausgangssignal ein Maß für die hinter dem Untersieb 8 in die Überkehr fallenden Körner ist.

All diese Messeinrichtungen 15, 16, 17, 18 sind mit einer Steuereinrichtung (nicht dargestellt) in der Erntemaschine 1 verbunden. Weiterhin sind mit dieser Steuereinrichtung noch andere Sensoren, beispielsweise ein Geschwindigkeitsmesser, mit dem die Fahrgeschwindigkeit der Erntemaschine ermittelt werden kann, aber auch verschiedene Messsensoren zur Feststellung der Einstellung bestimmter weiterer Arbeitsaggregate, beispielsweise zur Messung der Drehzahl der Dreschtrommel oder der Korbweite des Dreschkorbs etc., angeschlossen. Mit Hilfe dieser Steuereinrichtung kann ein automatischer Optimierungsprozess durchgeführt werden, indem bestimmte Steuerparameter gezielt variiert werden und dann auf Basis der bei den verschiedenen Einstellungen ermittelten Arbeitsergebnismesswerte ein optimaler Zieleinstellwert für den betreffenden Steuerparameter ermittelt wird, welcher bei der nachfolgenden Erntefahrt als Sollwert für diesen Steuerparameter gilt. Ein geeignetes Verfahren ist zum Beispiel in der bereits eingangs erwähnten DE 101 47 733 A1 beschrieben. Bevorzugt wird jedoch das in der DE 10 2005 014 278 beschriebene Verfahren verwendet. Für die konkrete Durchführung des Optimierungsverfahrens wird daher auf die genannten Schriften verwiesen, und das Optimierungsverfahren und die hierfür benötigte Steuereinrichtung werden daher im Folgenden nicht weiter detailliert erläutert.

Teil dieser Steuereinrichtung oder an die Steuereinrichtung angeschlossen ist auch eine Anzeigesteuereinrichtung 21, über die eine Anzeigeeinrichtung 20 eines Bedienerterminals gesteuert wird, das sich innerhalb der Fahrerkabine 19 befindet. Der Fahrer kann über dieses Bedienerterminal die Steuereinrichtung bedienen bzw. programmieren. Über die Anzeigeeinrichtung 20 werden ihm dabei die wesentlichen Einstellwerte der einzelnen Steuerparameter, die aktuellen Arbeitsergebniswerte sowie eine Vielzahl weiterer Hinweise und Warnmeldungen ausgegeben.

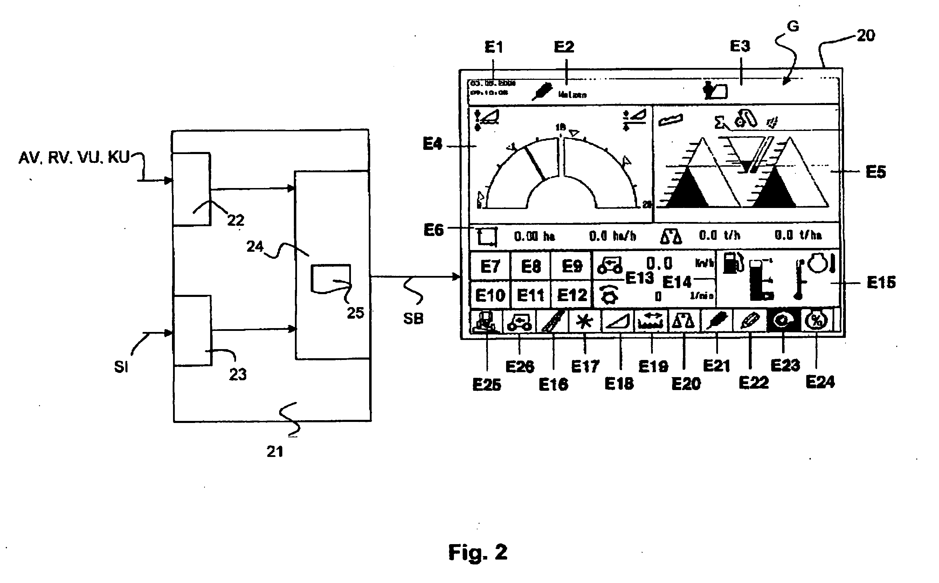

Dies erfolgt bei modernen Maschinen mit Hilfe einer graphischen Benutzeroberfläche G, die auf einem großen Display der Anzeigeeinrichtung 20 dargestellt ist, Figur 2 zeigt ein typisches Beispiel für eine solche graphische Benutzeroberfläche G auf der Anzeigeeinrichtung 20 eines Mähdreschers. Dargestellt ist in dieser Figur 2 auch die Anzeigesteuerungseinrichtung 21. Diese kann auch wie erwähnt Teil einer zentralen Maschinensteuereinrichtung des Mähdreschers sein. Wegen der besseren Übersichtlichkeit ist sie hier aber als separate Steuereinrichtung dargestellt. Die Anzeigesteuereinrichtung 21 wird später noch genauer erläutert.

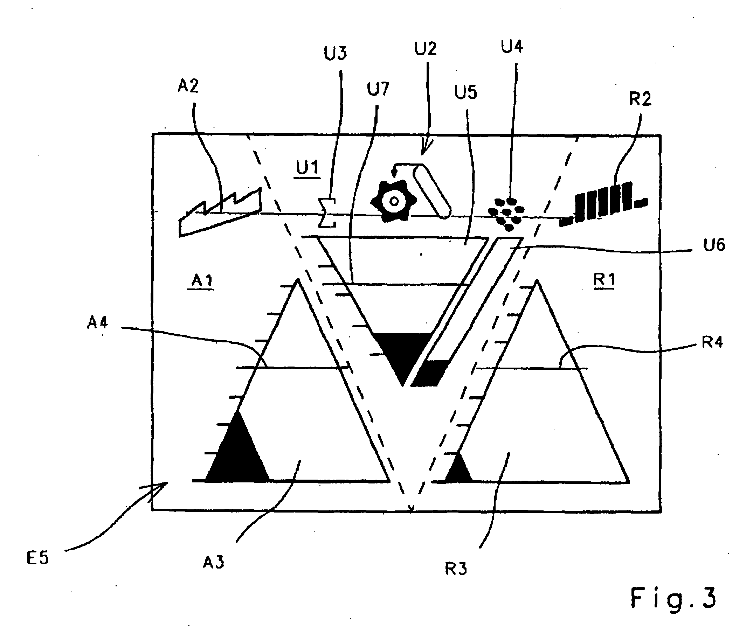

Auf der graphischen Benutzeroberfläche G befindet sich eine Vielzahl von Anzeigefeldern E1, E2, E3, ..., E26. Diese Anzeigefelder haben die folgende Bedeutung bzw. dienen folgenden Zwecken:
E1: Hier wird das aktuelle Datum und die aktuelle Uhrzeit angezeigt.
E2: Hier wird die Fruchtart angegeben, die derzeit geerntet wird und für die die optimalen Einstellwerte verwendet werden müssen.
E3: Hier wird der Kundenname, beispielsweise der Name des Inhabers des Hofes, dessen Feld aktuell gerade abgeerntet wird, eingegeben.
E4: In diesem Anzeigefeld wird die aktuelle Schnitthöhe angezeigt.
E5: Hierbei handelt es sich um das Anzeigefeld, in dem die verschiedenen Körnerverluste angezeigt werden. Dieses Feld wird im Nachfolgenden anhand von Figur 3 noch detaillierter erläutert.
E6: Hier werden Flächen- und Ertragsmesswerte sowie Flächen- und Durchsatzleistungen angezeigt.
E7-E12: Hierbei handelt es sich um verschiedene Meldefelder, auf denen bei Bedarf wichtige Informationen für den Fahrer ausgegeben werden, wie beispielsweise der Schlupf oder die Drehzahl verschiedener Arbeitsaggregate, z. B. kritische Betriebsabfälle des Motors oder bestimmte Betriebszustände.
E13: Dies ist ein Anzeigefeld für die aktuelle Fahrgeschwindigkeit
E14: Dies ist ein frei konfigurierbares Anzeigefeld, das hier für die aktuelle Dreschrommeldrehzahl genutzt wird.
E15: Dies ist ein Anzeigefeld für verschiedene weitere wichtige Maschinenparameter wie beispielsweise den Tankfüllstand oder die Motortemperatur.

Mittels der Anzeigefelder E16 bis E26 wird angezeigt, welcher Einstellmodus gerade eingestellt ist. Durch eine Betätigung eines Tasters am Bedienerterminal kann der Bediener wie in einem Menü zwischen den verschiedensten Einstellmodi hin- und herspringen. Im Einzelnen bedeuten die Felder:
E16: GPS-Einstellung
E17: Voreinstellung Haspel
E18: Voreinstellung Vorsatzgerät
E19: Teilbreitenstufung
E20: Ertragsmessung
E21: Fruchtauswahl
E22: Registrieren
E23: Einstellen
E24: Motorauslastung
E25: Montana®- Regelung (bei bestimmten Claas®-Mähdreschern)
E26: Claas®-Cruise-Pilot

Anhand von Figur 3 wird das Verlustanzeigefeld E5 näher erläutert. Das Anzeigefeld E5 ist in drei verschiedene Bereiche unterteilt, welche hier durch (in der Realität auf der graphischen Benutzeroberfläche G nicht sichtbare) gestrichelte Linien voneinander abgetrennt sind.

Der linke Bereich ist der Abscheideverlustanzeigebereich A1. Dies wird dem Fahrer mit dem Abscheideanzeige-Symbol A2 für die Abscheidung (ein Piktogramm eines Hordenschüttlers) signalisiert. Die Abscheideverlustanzeige A3 selbst ist in Form eines weißen Dreiecks dargestellt, wobei der aktuelle Abscheideverlustwert in Form eines ausgefüllten schwarzen Eckbereichs innerhalb des weißen Dreiecks symbolisiert wird. Angezeigt ist außerdem eine Abscheidesollwertlinie A4. Die Maschine sollte so betrieben werden, dass die Abscheideverluste maximal diese Abscheidesolllinie A4 erreichen.

Im mittleren Bereich befindet sich der Überkehranzeigebereich U1. Dies wird durch ein entsprechendes überkehranzeige-Symbol U2 angezeigt, welches den Rücktransport zum Dreschwerk stilisiert darstellt. Links daneben befindet sich ein Volumenüberkehranzeige-Symbol U3 in Form eines Summenzeichens. Rechts daneben ist ein Kornüberkehranzeige-Symbol U4 in Form eines Körnerhaufens angeordnet, welches die Kornüberkehr symbolisieren soll. Dementsprechend befinden sich unterhalb dieser Symbole zwei Anzeigen, zum einen eine Volumenüberkehranzeige U5 in Form eines auf der Spitze stehenden Dreiecks, die wiederum mit einer Sollwertlinie U7 versehen ist, welche nicht überschritten werden soll. Der hier dargestellte Volumenüberkehrwert ist ein Absolutwert. Zum anderen wird relativ hierzu der Kornüberkehranteil in der Kornüberkehranzeige U6 in Form eines parallel zum einen Schenkel des Dreiecks verlaufenden Balkendiagramms angezeigt.

Der ganz rechte Anzeigebereich ist der Reinigungsverlustanzeigebereich R1. Dies ist in der rechten oberen Ecke durch ein Reinigungsanzeige-Symbol R2 in Form von stilisierten Sieben dargestellt. Darunter befindet sich in gleicher Form wie die Abscheideverlustanzeige A3 eine Reinigungsverlustanzeige R3 in Form eines hellen Dreiecks und einem darin sich entsprechend dem Reinigungsverlustwert in der Größe ändernden schwarzen Dreieck. Auch hier wird eine Reinigungssollwertlinie R4 angezeigt, die nicht überschritten werden sollte.

Wie bereits eingangs erläutert, tritt ein Problem mit dieser Anzeige dann auf, wenn innerhalb eines Optimierungsprozesses automatisch vorübergehend bestimmte Steuerparameter, beispielsweise bei einer Reinigungsoptimierung die Siebgröße oder die Gebläsedrehzahl, verändert werden und dabei so eingestellt werden, dass es zu relativ hohen Verlusten kommt (in diesem Fall Reinigungsverlusten bzw. zu einer großen Überkehr). Dann würden entsprechend die angezeigten Verlustwerte stark ansteigen und die Solllinien A4, U7, R4 würden überschritten. Es besteht daher die große Gefahr, dass der Fahrer in üblicher Weise reagiert und beispielsweise die Fahrgeschwindigkeit drosselt. Andererseits muss diese aber gerade für den Optimierungsprozess konstant gehalten werden.

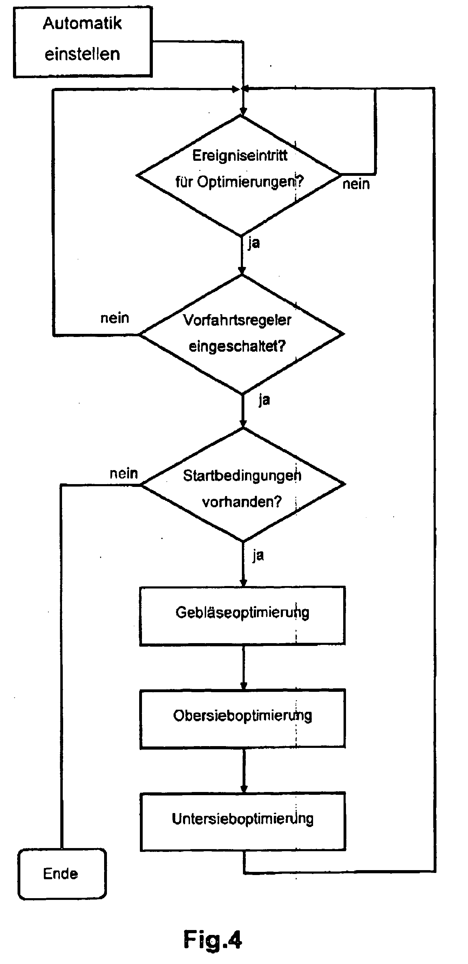

Ein möglicher Ablauf für eine solche automatische Optimierung ist beispielhaft für die Reinigungsoptimierung in Figur 4 dargestellt. In einem ersten Schritt muss der Bediener zunächst die Automatik einstellen. Es wird dann darauf gewartet, ob ein bestimmtes Ereignis eintritt, um eine Optimierung durchzuführen. Beispielsweise wird auf einen bestimmten Zeitpunkt gewartet oder darauf, dass die Erntebedingungen um ein bestimmtes Maß abweichen. Ist dies der Fall, so wird eine automatische Optimierung durchgeführt. Dabei wird zunächst geprüft, ob der Vorfahrtsregler eingeschaltet ist, d. h. ob die Maschine automatisch mit konstanter Geschwindigkeit oder mit konstantem Durchsatz gefahren wird. Diese Abfrage ist optional. Vorzugsweise weist das automatische Optimierungsverfahren jedoch diesen Schritt auf, da hiermit die bereits eingangs erwähnte Vorteile verbunden sind, nämlich dass zum einen bei eingeschaltetem Vorfahrtsregler davon auszugehen ist, dass Erntebedingungen vorliegen, die über einen längeren Zeitraum konstant sind, und dass zum anderen der Vorfahrtsregler dazu genutzt werden kann, um während des Optimierungsprozesses automatisch die Geschwindigkeit in der gewünschten Weise konstant zu halten. Ist der Vorfahrtsregler nicht eingeschaltet, so wird auf den nächsten Ereigniseintritt gewartet, andernfalls wird geprüft, ob die Startbedingungen für eine automatische Optimierung gegeben sind, d. h. ob zum Beispiel die Dreschorgane und die Reinigungseinrichtung eingestellt sind. Ist dies nicht der Fall, so wird das Verfahren sofort beendet. Andernfalls wird mit der Optimierung der Gebläsedrehzahl begonnen. Danach erfolgt eine Optimierung der Obersiebeinstellung. Ist für das Obersieb der optimale Zielwert gefunden, so folgt schließlich die Untersieboptimierung. Danach ist die Optimierung der Reinigungseinrichtung abgeschlossen. Der genaue Ablauf dieser Optimierungsschritte ist beispielsweise ebenfalls in der DE 10 2005 014 278 beschrieben.

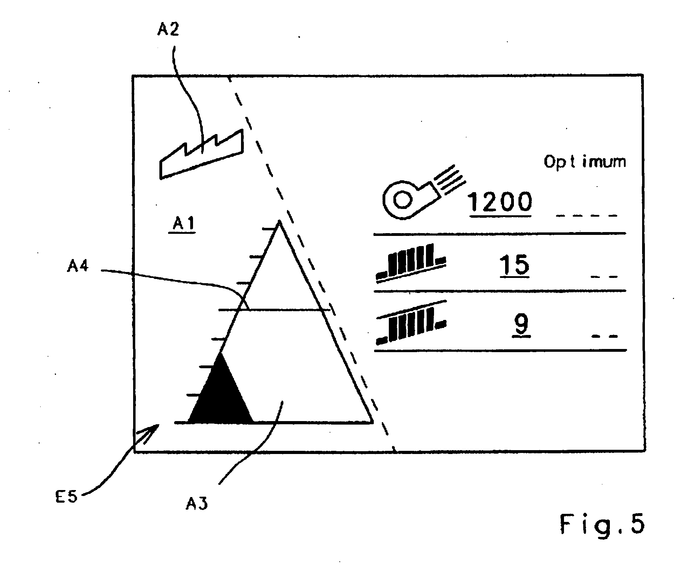

Um zu vermeiden, dass der Bediener durch die auf der Anzeige schwankenden Verlustwerte, welche kurzfristig die Sollwerte überschreiten, zu einer Reaktion veranlasst wird, wird erfindungsgemäß die Anzeigeeinrichtung 20 so angesteuert, dass genau die Verlustwerte, welche durch die Reinigungsoptimierung beeinflusst werden, nämlich die Überkehrwerte und die Reinigungsverlustwerte, in dem Verlustanzeigefeld E5 in der auf der Anzeigeeinrichtung 20 ausgegebenen graphischen Benutzeroberfläche G ausgeblendet werden. Dies ist für das Beispiel einer Optimierung der Reinigungseinrichtung 6 in Figur 5 dargestellt. Wie hier zu sehen ist, weist das Verlustanzeigefeld E5 lediglich noch den Abscheideverlustanzeigebereich A1 auf, da die Abscheideverluste nicht durch die Einstellung der Reinigungseinrichtung beeinflusst werden. Anstelle des Überkehranzeigebereichs U1 und des Reinigungsverlustanzeigebereichs R1 sind hier in einer Tabelle die vor der Optimierung geltenden Sollwerte für die Einstellparameter für das Gebläse (obere Zeile), das Obersieb (mittlere Zeile) und das Untersieb (unterste Zeile) dargestellt. Dabei sind die betreffenden Werte unmittelbar hinter den jeweiligen Symbolen angezeigt. Unter dem Hinweis "Optimum" werden dann jeweils die neuen optimalen Zieleinstellwerte (neue Sollwerte) ausgegeben, sobald der Optimierungsschritt durchlaufen wurde. Nachdem dann schließlich der gesamte Optimierungsprozess abgeschlossen wird und wieder in den normalen Modus zurückgeschaltet ist, schaltet auch die Anzeige um und es werden wieder der Überkehranzeigebereich U1 und der Reinigungsverlustanzeigebereich R1 angezeigt (siehe Figur 3) und die aktuellen Werte für die Volumenüberkehr, die Kornüberkehr und die Reinigungsverluste ausgegeben.

Um dieses Anzeigemanagement zu erreichen, weist die Anzeigesteuerungseinrichtung 21 (siehe Figur 2) einen ersten Signaleingang 22 bzw. eine entsprechende Schnittstelle auf, an der die Anzeigesteuerungseinrichtung 21 die aktuellen Arbeitsergebniswerte, nämlich den Abscheideverlustwert AV den Reinigungsverlustwert RV, den Volumenüberkehrwert VU und den Kornüberkehrwert KU empfängt. Über einen Statussignaleingang 23 bzw. eine entsprechende Schnittstelle werden in Form eines geeigneten Signals Statusinformation SI der Erntemaschine empfangen, welche signalisieren, ob gerade ein Optimierungsprozess abläuft und welcher Steuerparameter für welches Arbeitsaggregat betroffen ist.

Die Anzeigesteuerungseinrichtung 21 enthält außerdem eine Anzeigeschnittstelle 24. Diese generiert auf Basis der Arbeitsergebniswerte AV, RV, VU, KU jeweils Grafik-Steuerbefehle SB für die Anzeigeeinrichtung 20, um die Arbeitsergebniswerte AV, RV, VU, KU in der in Figur 3 dargestellten Form auf der graphischen Benutzeroberfläche G auszugeben. Über den Statussignaleingang 23 erhält diese Anzeigeschnittstelle 24 auch die jeweiligen Informationen über die veränderten Steuerparameter innerhalb des Optimierungsprozesses.

In einer Tabelle 25 ist hinterlegt, welche Steuerparameter welche Arbeitsergebniswerte in relevanter Weise beeinflussen. Hier ist beispielsweise hinterlegt, dass eine Optimierung der Reinigungseinrichtung die Reinigungsverlustwerte, die Volumenüberkehrwerte und die Kornüberkehrwerte beeinflusst. Aus der Liste 25 werden dann die durch den Optimierungsprozess beeinflussten Arbeitsergebniswerte ausgewählt, und die Steuerbefehle SB für die Anzeigeeinrichtung werden so generiert, dass dementsprechend die Anzeigebereiche für diese Arbeitsergebniswerte nicht ausgegeben werden, sondern beispielsweise eine wie in Figur 5 dargestellte Anzeige der ursprünglichen Soll-Parameterwerte und der neuen Zieleinstellwerte erfolgt.

Dadurch wird sicher vermieden, dass der Fahrer auf eine stark ungünstig veränderte Überkehranzeige oder Reinigungsverlustanzeige in ungünstiger Weise reagiert, sondern es wird ihm signalisiert, dass hier ein Optimierungsprozess automatisch abläuft. Dies ist insofern wichtig, als sich bei Veränderung der Steuerparameter in der Regel auch das Geräuschspektrum der Maschine ändert, was von einem erfahrenen Fahrer sofort registriert wird. Durch die passende Anzeige wird dem Fahrer übermittelt, dass diese Änderung des Geräuschspektrums durch den automatisierten Optimierungsprozess bedingt ist und keine weiteren Maßnahmen zu ergreifen sind.

Wie im Zusammenhang mit Figur 4 erläutert, ist es optional, ob innerhalb des Optimierungsprozesses der Vorfahrtsregler verwendet wird, um die Geschwindigkeit konstant zu halten. Sofern auf diese Option verzichtet wird, das heißt die Maschine auch einen manuellen oder automatischen Start des Optimierungsprozesses ohne eingeschalteten Vorfahrtsregler erlaubt, muss trotzdem dafür gesorgt werden, dass die Fahrgeschwindigkeit konstant gehalten wird. Aus diesem Grund wird während des Optimierungsprozesses in dem in Zusammenhang mit Figur 2 erläuterten frei konfigurierbaren Anzeigefeld E14, welches dort für die Anzeige der Rotationsgeschwindigkeit der Dreschtrommeldrehzahl genutzt wird, mit Hilfe eines Balkendiagramms ein Fahrgeschwindigkeitsbereich mit einem minimalen Wert und einem maximalen Wert angegeben, in welchem der Fahrer die Fahrgeschwindigkeit manuell halten sollte. Der aktuelle Wert wird auf diesem Balkendiagramm durch einen Pfeil dargestellt, so dass der Fahrer immer sieht, ob er sich an der unteren Grenze oder an der oberen Grenze des zulässigen Bereichs befindet.

Aus Sicherheitsgründen ist das System so ausgelegt, dass der Fahrer während eines Ernteeinsatzes jederzeit in der Lage ist, einzelne oder alle eingestellten Maschinenparameter manuell zu übersteuern. Es wird abschließend noch einmal darauf hingewiesen, dass es sich bei dem in den Figuren dargestellten Mähdrescher und der Steuerung sowie dem im Zusammenhang damit erläuterten konkreten Verfahren lediglich um Ausführungsbeispiele handelt, welche vom Fachmann in vielfacher Hinsicht variiert werden können, ohne den Rahmen der Erfindung zu verlassen. Es wird außerdem der Vollständigkeit halber darauf hingewiesen, dass die Verwendung der unbestimmten Artikel "ein" bzw. "eine" nicht ausschließt, dass die betreffenden Merkmale auch mehrfach vorhanden sein können.

### Bezugszeichenliste

1 Mähdrescher
2 Mäheinrichtung
3 Einzugskanal
4 Dreschwerk
5 Abscheideeinrichtung
6 Reinigungseinrichtung
7 Obersieb
8 Untersieb
9 Gebläse
10 Auffang- und Führungsboden
11 Auffang- und Führungsboden
12 Überkehrelevator
13 Auffang- und Führungsboden
14 Elevator
15 Abscheideverlust-Messeinrichtung
16 Reinigungsverlust-Messeinrichtung
17 Überkehr-Messeinrichtung
18 Kornüberkehr-Messeinrichtung
19 Fahrerkabine
20 Anzeigeeinrichtung
21 Anzeigesteuerungseinrichtung
22 Signaleingang
23 Statussignaleingang
24 Anzeigeschnittstelle
G graphische Benutzeroberfäche
AV Abscheideverlustwert
RV Reinigungsverlustwert
SB Grafik-Steuerbefehle
SI Statussignal
VU Volumenüberkehrwert
KU Kornüberkehrwert
A1 Abscheideverlustanzeigebereich
A2 Abscheideanzeige-Symbol
A3 Abscheideverlustanzeige
A4 Abscheidesollwertlinie
U1 Überkehranzeigebereich
U2 Überkehranzeige-Symbol
U3 Volumenüberkehranzeige-Symbol
U4 Kornüberkehranzeige-Symbol
U5 Volumenüberkehranzeige
U6 Kornüberkehranzeige
U7 Sollwertlinie
R1 Reinigungsverlustanzeigebereich
R2 Reinigungsanzeige-Symbol
R3 Reinigungsverlustanzeige
R4 Reinigungssollwertlinie
E1 , E2, ..., E26 Anzeigefelder

## Patentansprüche

1. Verfahren zur Steuerung einer Anzeigeeinrichtung (20) in einer Erntemaschine (1), bei dem für einen Bediener der Erntemaschine (1) eine Anzahl von aktuellen Arbeitsergebniswerten (AV, RV, VU, KU) auf der Anzeigeeinrichtung (20) angezeigt werden,
wobei während eines Optimierungsprozesses, in welchem vorübergehend verschiedene Einstellungen eines Steuerparameters eines Arbeitsaggregats (4, 5, 6) der Erntemaschine (1) angefahren werden, um automatisch einen an einen Ernteprozess angepassten Ziel-Einstellwert des betreffenden Steuerparameters zu ermitteln, die Anzeige (U5, U6, R3) von solchen aktuellen Arbeitsergebniswerten (RV, VU, KU) unterdrückt oder als ungültig markiert wird, die durch den betreffenden Steuerparameter beeinflusst werden.

2. Verfahren nach Anspruch 1, **dadurch gekennzeichnet, dass** die Anzeige (U5, U6, R3) der betreffenden aktuellen Arbeitsergebniswerte (RV, VU, KU) oder ein vollständiger Anzeigebereich (U1, R1), der die betreffenden aktuellen Arbeitsergebniswerte (RV, VU, KU) betrifft, ausgeblendet wird.

3. Verfahren nach Anspruch 1, **dadurch gekennzeichnet, dass** die Anzeige der betreffenden aktuellen Arbeitsergebniswerte oder ein vollständiger Anzeigebereich, der die betreffenden aktuellen Arbeitsergebniswerte betrifft, in einer abgeschwächten Darstellung angezeigt wird.

4. Verfahren nach Anspruch 1, **dadurch gekennzeichnet, dass** anstelle der aktuellen Arbeitsergebniswerte die letzten Arbeitsergebniswerte vor einem Starten des Optimierungsprozesses angezeigt werden.

5. Verfahren zur Steuerung einer Erntemaschine (1), bei dem zur Ermittlung eines an einen Ernteprozess angepassten Ziel-Einstellwertes für einen Steuerparameter eines Arbeitsaggregats (4, 5, 6) einer Erntemaschine (1) der betreffende Steuerparameter in einem Optimierungsprozess automatisch variiert wird und Arbeitsergebniswerte bei verschiedenen Einstellungen des Steuerparameters ermittelt werden und auf Basis der verschiedenen Arbeitsergebniswerte der Ziel-Einstellwert des Steuerparameters bestimmt wird,
wobei eine Anzeigeeinrichtung (20) in der Erntemaschine (1), auf der für einen Bediener eine Anzahl von aktuellen Arbeitsergebniswerten (AV, RV, VU, KU) angezeigt werden, gemäß einem Verfahren nach einem der Ansprüche 1 bis 4 gesteuert wird.

6. Verfahren nach Anspruch 5, **dadurch gekennzeichnet, dass** der Optimierungsprozess bei Eintritt eines vorgegebenen Ereignisses automatisch gestartet wird.

7. Verfahren nach Anspruch 6, **dadurch gekennzeichnet, dass** das Ereignis, bei dessen Eintritt automatisch der Optimierungsprozess gestartet wird, einen bestimmten Zeitpunkt oder den Ablauf einer bestimmten Zeitspanne oder eine bestimmte Änderung der Erntebedingung oder das Erreichen einer bestimmten geographischen Position durch die Erntemaschine oder eine Kombination dieser Ereignisse umfasst.

8. Verfahren nach Anspruch 6 oder 7, **dadurch gekennzeichnet, dass** nur dann bei Eintritt des Ereignisses automatisch der Optimierungsprozess gestartet wird, wenn die Erntemaschine in einem automatischen Fahrgeschwindigkeitsregelungsmodus betrieben wird.

9. Anzeigesteuerungseinrichtung (21) zur Steuerung einer Anzeigeeinrichtung (20) in einer Erntemaschine (1), mit
- einem Signaleingang (22) zum Empfang von aktuellen Arbeitsergebniswerten (AV, RV, VU, KU) der Erntemaschine (1),
- einem Statussignaleingang (23) zum Empfang von Statusinformationen (S1) der Erntemaschine (1), signalisieren, ob im Rahmen eines Optimierungsprozesses ein Steuerparameter eines Arbeitsaggregats (4, 5, 6) der Erntemaschine (1) vorübergehend in verschiedene Einstellungen gefahren wird, um automatisch einen an einen Ernteprozess angepassten Ziel- Einstellwert des betreffenden Steuerparameters zu ermitteln,
- und einer Anzeigeschnittstelle (24), welche an die Anzeigeeinrichtung auf Basis der Arbeitsergebniswerte (AV, RV, VU, KU) generierte Steuerbefehle (SB) übergibt, um die Arbeitsergebniswerte (AV, RV, VU, KU) in einer definierten Weise auszugeben,
und welche so ausgebildet ist, dass während eines Optimierungsprozesses die Anzeige (U5, U6, R3) von solchen aktuellen Arbeitsergebniswerten (RV, VU, KU) unterdrückt oder als ungültig markiert wird, die durch den betreffenden Steuerparameter beeinflusst werden.

10. Erntemaschine (1), mit einer Anzeigeeinrichtung (20) zur Ausgabe von aktuellen Arbeitsergebniswerten (AV, RV, VU, KU) an einen Bediener und einer Anzeigesteuerungseinrichtung (21) nach Anspruch 9.

## Claims

1. Method for controlling a display device (20) in a harvester (1), in which method a number of current working result values (AV, RV, VU, KU) are displayed to an operator of the harvester (1) on the display device (20),
wherein, during an optimization process in which various settings of a control parameter of an implement (4, 5, 6) of the harvester (1) are temporarily adopted in order to automatically determine a target setting value of the respective control parameter which is adapted to a harvesting process, the display (U5, U6, R3) of current working result values (RV, VU, KU) which are influenced by the respective control parameter is suppressed or is marked as being invalid.

2. Method according to Claim 1, **characterized in that** the display (U5, U6, R3) of the respective current working result values (RV, VU, KU) or a complete display range (U 1, R1) which relates to the respective current working result values (RV, VU, KU) is removed.

3. Method according to Claim 1, **characterized in that** the display of the respective current working result values or a complete display range which relates to the respective current working result values is displayed in an attenuated form.

4. Method according to Claim 1, **characterized in that**, instead of the current working result values, the last working result values before the starting of the optimization process are displayed.

5. Method for controlling a harvester (1), in which method the respective control parameter is varied automatically in an optimization process in order to determine a target setting value, adapted to a harvesting process, for a control parameter of an implement (4, 5, 6) of a harvester (1), and the working result values are determined at various settings of the control parameter and the target setting value of the control parameter is determined on the basis of the various working result values,
wherein a display device (20) in the harvester (1), on which a number of current working result values (AV, RV, VU, KU) are displayed to an operator, is controlled in accordance with a method according to one of Claims 1 to 4.

6. Method according to Claim 5, **characterized in that** the optimization process is started automatically when a predefined result occurs.

7. Method according to Claim 6, **characterized in that** the result at whose occurrence the optimization process is automatically started comprises a specific time or the expiry of a specific time period or a specific change in the harvesting condition or the reaching of a specific geographic position by the harvester or a combination of these events.

8. Method according to Claim 6 or 7, **characterized in that** the starting of the optimization process when the harvester is being operated in an automatic velocity control mode is carried out automatically only when the event occurs.

9. Display control device (21) for controlling a display device (20) in a harvester (1), having
- a signal input (22) for receiving current working result values (AV, RV, VU, KU) of the harvester (1),
- a status signal input (23) for receiving status information (SI) of the harvester (1), which information signals whether, within the scope of an optimization process, a specific control parameter of an implement (4, 5, 6) of the harvester (1) is moved temporarily into various settings in order to automatically determine a target setting value, adapted to a harvesting process, of the respective control parameter,
- and a display interface (24) which transfers control commands (SB) which have been generated on the basis of the working result values (AV, RV, VU, KU) to the display device in order to output the working result values (AV, RV, VU, KU) in a defined fashion, which display interface (24) is embodied in such a way that during an optimization process the display (U5, U6, R3) of current working result values (RV, VU, KU) which are influenced by the respective control parameter is suppressed or marked as being invalid.

10. Harvester (1) having a display device (20) for outputting current working result values (AV, RV, VU, KU) to an operator, and a display control device (21) according to Claim 9.

## Revendications

1. Procédé de commande d'un dispositif d'affichage (20) dans une moissonneuse (1), dans lequel un nombre de valeurs de résultat de travail (AV, RV, VU, KU) actuelles sont affichées sur un dispositif d'affichage (20) pour un opérateur de la moissonneuse (1),
dans lequel, pendant un processus d'optimisation au cours duquel temporairement, des réglages différents d'un paramètre de commande d'un organe de travail (4, 5, 6) de la moissonneuse (1) sont établis pour déterminer automatiquement une valeur de réglage cible du paramètre de commande concerné, adaptée à un processus de moisson, l'affichage (U5, U6, R3) de telles valeurs de résultat de travail actuelles (RV, VU, KU), qui sont influencées par le paramètre de commande concerné, est supprimé ou marqué comme étant annulé.

2. Procédé selon la revendication 1, **caractérisé en ce que** l'affichage (U5, U6, R3) des valeurs de résultat de travail (RV, VU, KU) actuelles concernées ou une zone d'affichage (U1, R1) complète, qui concerne les valeurs de résultat de travail actuelles (RV, VU, KU), est coupé(e).

3. Procédé selon la revendication 1, **caractérisé en ce que** l'affichage des valeurs de résultat de travail actuelles concernées ou une zone d'affichage complète, qui concerne les valeurs de résultat de travail actuelles, est affiché(e) dans une représentation atténuée.

4. Procédé selon la revendication 1, **caractérisé en ce qu'**à la place des valeurs de résultat de travail actuelles, les dernières valeurs de résultat de travail sont affichées avant un démarrage du processus d'optimisation.

5. Procédé de commande d'une moissonneuse (1), dans lequel, pour déterminer une valeur de réglage cible adaptée à un processus de moissonnage pour un paramètre de commande d'une unité de travail (4, 5, 6) d'une moissonneuse (1), le paramètre de commande concerné est varié automatiquement au cours d'un processus d'optimisation, et des valeurs de résultat de travail sont déterminées à différents réglages du paramètre de commande, et sur la base des différentes valeurs de résultat de travail est déterminée la valeur de réglable cible du paramètre de commande,
un dispositif d'affichage (20), qui se trouve dans la moissonneuse (1) et sur lequel un nombre de valeurs de résultat de travail (AV, RV, VU, KU) actuelles sont affichées pour un opérateur de la moissonneuse (1), étant commandé selon un procédé selon l'une des revendications 1 à 4.

6. Procédé selon la revendication 5, **caractérisé en ce que** le processus d'optimisation est démarré automatiquement à l'arrivée d'un évènement prédéterminé.

7. Procédé selon la revendication 6, **caractérisé en ce que** l'évènement, à l'arrivée duquel le processus d'optimisation est démarré automatiquement, comprend un moment déterminé ou le déroulement d'une période ou une modification déterminée d'une condition de moissonnage ou l'atteinte d'une position géographique déterminée par une moissonneuse ou une combinaison de ces évènements.

8. Procédé selon la revendication 6 ou 7, **caractérisé en ce que** le processus d'optimisation n'est démarré automatiquement à l'arrivée d'un évènement que si la moissonneuse fonctionne dans un mode automatique de réglage de vitesse de marche automatique.

9. Dispositif de commande d'affichage (21) pour commander un dispositif d'affichage (20) dans une moissonneuse (1), comportant
- une entrée de signal (22) destinée à recevoir des valeurs de résultat de travail (AV, RV, VU, KU) actuelles de la moissonneuse (1),
- une entrée de signal d'état (23) destinée à recevoir des informations d'état (SI) de la moissonneuse (1), qui signalisent si dans le cas d'un processus d'optimisation, un paramètre de commande déterminé d'une unité de travail (4, 5, 6) de la moissonneuse (1) fonctionne temporairement dans différents réglages pour déterminer automatiquement une valeur de réglage cible du paramètre de commande concerné, qui est adaptée à un processus de moissonnage,
- et une interface d'affichage (24) qui transmet au dispositif d'affichage des instructions de commande (SB) engendrées sur la base des valeurs de résultat de travail (AV, RV, VU, KU) pour délivrer les valeurs de résultat de travail (AV, RV, VU, KU) d'une manière définie, et qui est réalisée de telle sorte que pendant un processus d'optimisation, l'affichage (U5, U6, R3) de telles valeurs de résultat de travail actuelles (RV, VU, KU), qui sont influencées par le paramètre de commande concerné, est supprimé ou marqué comme étant annulé.

10. Moissonneuse (1) comportant un dispositif d'affichage (20) destiné à délivrer des valeurs de résultat de travail actuelles (AV, RV, VU, KU) à un opérateur et comportant un dispositif de commande d'affichage (21) selon la revendication 9.
